# EUROPÄISCHE PATENTANMELDUNG

(11) **EP 3 282 237 A1**
(43) Veröffentlichungstag der Anmeldung: **14.02.2018**
(21) Anmeldenummer: 17186247.7
(22) Anmeldetag: 10.12.2014
(51) Int. Cl.: G01M 3/18, G01M 5/00

(54) **LECKAGEÜBERWACHUNGSSYSTEM FÜR RAUMUMSCHLIESSENDE OBJEKTE UND DAZWISCHEN LIEGENDE KUPPLUNGSBEREICHE SOWIE ZUGEHÖRIGES VERFAHREN**

(30) Priorität: 20.12.2013 DE 102013227043
(62) Teilanmeldung aus: 14818918.6
(71) Anmelder: AREVA GmbH, 91052 Erlangen (DE)
(72) Erfinder: HORBACH, Robert, 63755 Alzenau (DE); STARK, Stefan, 91090 Effeltrich (DE); KLUCZEWSKI, Paul, 91054 Erlangen (DE); SCHLEGL, Thomas, 91052 Erlangen (DE)
(74) Vertreter: Kugler, Jörg

(57) **Zusammenfassung**

Ein Leckageüberwachungssystem (2) für raumumschließende Objekte, wie etwa Rohre (4), Schläuche oder Behälter mit einer Umfassungswand (6) weist zumindest ein als Leckagesensor (8) wirksames, an der Umfassungswand (6) montiertes oder in diese integriertes elektrisch leitfähiges Element auf. Um auch bei großflächigen Wandbereichen eine einfache und zuverlässige Überwachung auf bevorstehende oder bereits stattfindende Leckagen zu ermöglichen, und dies möglichst universell für verschiedenartige Medien, ist erfindungsgemäß das elektrisch leitfähige Element Bestandteil einer Messbrücke (12), die eine Auswertungsvorrichtung (20) für die Brückenspannung (V_{Mess}) aufweist, und die über eine Spannungsquelle (18) mit einer Betriebsspannung (U_{G}) versorgt wird, die sowohl Wechselspannungsanteile als auch Gleichspannungsanteile enthält.

## Beschreibung

Die Erfindung betrifft ein Leckageüberwachungssystem für raumumschließende Objekte, insbesondere aus Kunststoff, wie etwa Rohre, Schläuche oder Behälter, mit einer ein darin geführtes Medium von der äußeren Umgebung trennenden Umfassungswand, wobei das System zumindest ein als Leckagesensor wirksames, an der Umfassungswand montiertes oder in diese integriertes elektrisch leitfähiges Element aufweist. In einer speziellen Ausprägung erfolgt eine gezielte Überwachung von Kupplungs- oder Übergangsbereichen zwischen derartigen medienführenden Umhüllungen, insbesondere Rohren oder Schläuchen, die in beliebiger Weise und Reihenfolge miteinander kombinierbar sind. Die Erfindung betrifft ferner ein entsprechendes Verfahren zur vorbeugenden und/oder unmittelbaren Leckageüberwachung.

In vielen Rohrleitungen, Schläuchen oder Behältern von industriellen Anlagen, insbesondere in kerntechnischen Anlagen, werden Flüssigkeiten oder Gase (allgemein: Fluide) geführt, die für die Umgebung schädlich oder gefährlich sind. Dies macht eine Überwachung derartiger fluidführender oder medienumschließender Objekte auf Leckage notwendig.

Zu diesem Zweck wurden verschiedenartige Sensortypen und Überwachungsmethoden entwickelt. Beispielsweise ist es bekannt, die Integrität einer Rohrwand mit Hilfe von darin eingebetteten elektrischen Leitern zu überwachen. Die EP 2 287 587 A2 offenbart in diesem Zusammenhang ein System, bei dem basierend auf der Wirkung eines elektrischen Kurzschlusses zwischen zwei in ein Rohr eingebrachten Leitern eine Überwachungsaufgabe gelöst wird.

Ein derartiges System ist jedoch weder spezifisch dafür ausgelegt, noch sensitiv genug, um auch kleinste Leckagen von Fluiden, etwa an Nahtstellen einer Rohr- oder Behälterwand oder durch Mikroporen hindurch, zuverlässig festzustellen.

Der vorliegenden Erfindung liegt die Aufgabe zugrunde, ein Leckageüberwachungssystem der eingangs genannten Art anzugeben, welches auch bei großflächigen Wandbereichen eine einfache und zuverlässige Überwachung auf kleinste Leckagen ermöglicht, und dies möglichst universell für verschiedenartige Fluide oder Medien. Insbesondere wird eine vorbeugende Überwachung angestrebt, die bereits vor einer tatsächlich einsetzenden, also bei einer bevorstehenden Leckage anspricht. Weiterhin soll ein entsprechendes Verfahren angegeben werden.

In Bezug auf die Vorrichtung wird die Aufgabe erfindungsgemäß gelöst durch die Merkmale des Anspruchs 1 und in Bezug auf das Verfahren durch die Merkmale des Anspruchs 9.

Demzufolge ist das an der Umfassungswand montierte oder in diese integrierte elektrisch leitfähige Element Bestandteil einer Messbrücke, die eine Auswertungsvorrichtung für die Brückenspannung aufweist, und die über eine Spannungsquelle mit einer Betriebsspannung versorgt wird, die sowohl Wechselspannungsanteile als auch Gleichspannungsanteile enthält. Das elektrisch leitfähige oder im Allgemeinen elektrisch wirksame Element kann dabei jegliche für die Überwachungsaufgabe zweckmäßige räumliche Form und Struktur aufweisen, insbesondere eine Sensorschicht bilden, und wird im Folgenden vereinfachend auch kurz als Leiter bezeichnet.

Die Erfindung geht davon aus, dass im Wand- oder Hüllmaterial zumindest ein elektrisch wirksamer Sensor (z. B. ein leitfähiges Maschennetz oder Gitter oder eine Anordnung von Drähten, aber auch Elemente aus leitfähigem oder halbleitendem Material in anderer Gestalt) zwischen der vom Medium abgewandten Außenseite und der mediumführenden Innenseite eingebracht ist. Die Anordnung des Sensormaterials wird als gegeben angenommen. Als Sensormaterialien können alle Materialien verwendet werden, die eine ausreichend große Änderung einer ihrer elektrischen Kenngrößen - insbesondere elektrischer Widerstand, Kapazität und/oder Induktivität - für den Fall einer Leckage liefern.

Darüber hinaus wird nicht durch eine tatsächliche Leckage detektiert, sondern es ist bevorzugt eine vorbeugende oder vorhersagende Überwachung möglich in dem Sinne, dass bereits eine einer Leckage vorausgehende Material- oder Gefügeänderung des Wandmaterials, etwa durch Beschädigung, Abnutzung, Erosion und dergleichen, zu einer Änderung elektrischer Kenngrößen führt, die messtechnisch detektiert und ggf. zur Alarmauslösung verwendet wird - noch bevor es tatsächlich zur Leckage kommt. Wenn im Rahmen dieser Beschreibung vereinfachend von einer Überwachung auf Leckage die Rede ist, ist stets der Fall einer derartigen vorbeugenden Überwachung auf eine drohende oder unmittelbar bevorstehende Leckage mit enthalten. Entsprechend sind auch Begriffe wie "Leckagesensor" und dergleichen zu verstehen.

Der Erfindung liegt die Idee zugrunde, den auf diese Weise verwirklichten Sensor messtechnisch in eine Wechselspannungs-Messbrücke einzubeziehen. Es wird damit durch die Messung und Auswertung der Brückenspannung, insbesondere hinsichtlich Frequenz, Betrag und Phasenlage, eine Bewertung des komplexen elektrischen Widerstandes (Impedanz) vorgenommen. Dies berücksichtigt sowohl ohmsche als auch kapazitive und/oder induktive Änderungen der Anordnung, die durch eine mit der Leckage einhergehende oder ihr vorausgehende Materialänderung hervorgerufen werden.

Der eigentliche Sensor ist somit ein in das Überwachungsobjekt, etwa in eine Rohr- / Schlauch- / Behälterwand, integriertes Element der Messbrücke. Die sonstigen elektrischen / elektronischen Komponenten, die die Anordnung zu einer vollständigen Messbrücke ergänzen, werden in einer separaten Messschaltung realisiert. Die messtechnische Anordnung kann am Prüfling, in seiner unmittelbaren Nähe oder entfernt angebracht werden.

Wesentlich ist, dass die Messbrücke sowohl mit Gleich- als auch Wechselspannung einer bestimmten, bekannten Frequenz gespeist wird. Die Auslegung der Schaltung ermöglicht es, dass kleinste Änderungen der elektrischen Parameter (verursacht durch die zu einer Leckage führenden Material- oder Formänderungen) sowohl zu einer großen Amplitudenänderung als auch zu einer Veränderung der Signalform infolge der Überlagerung von Gleich- und Wechselspannungsanteilen führen. Dies erhöht die Auswerte- und Bewertungssicherheit des erzeugten Signales gegenüber Störungen und dem Signal im Gut-Zustand.

Die Auswerteeinheit umfasst bevorzugt eine elektronische Verarbeitungseinheit für das Messsignal. Sie kann in einem einfachen Fall lediglich in einer Anzeigevorrichtung für das Messsignal bestehen aber natürlich auch noch weitere und/oder alternative Komponenten besitzen. Beispielsweise kann eine elektronische Speichereinheit für das Messsignal vorhanden sein, etwa in Gestalt eines Ringspeichers und/oder Permanentspeichers. Weiterhin ist ein Diagnosemodul vorteilhaft, das beispielsweise anhand von Schwellwerten und/oder von einschlägigen Auswertungsalgorithmen plötzliche und/oder langfristige Änderungen des Messsignals, die auf eine drohende / bevorstehende / gerade einsetzende oder bereits stattfindende Leckage hindeuten, automatisch erkennt und/oder in verschiedene Merkmalsgruppen klassifiziert und insbesondere zur Alarmauslösung verwendet.

Die Frequenz der Wechselspannung ist vorzugsweise umschaltbar oder überdeckt einen bestimmten Frequenzbereich. Die Umschaltung der Frequenz kommt insbesondere dann zum Einsatz, wenn bei einer Plausibilitätsprüfung der Brückenverstimmung bestimmte Kriterien zu keiner schlüssigen Bewertung des Signales führen.

Die Messschaltung ist vorzugsweise bandbegrenzt, d. h. sie arbeitet nur in einem kleinen Frequenzbereich um die Grundfrequenz. Diese Auslegung wird auch dann beibehalten, wenn die Frequenz wie oben beschrieben umgeschaltet wird.

Im Einklang mit dem Messprinzip ist das Wand- bzw. Hüllmaterial des zu überwachenden Objektes, etwa des Rohres / Schlauches / Behälters, vorzugsweise nicht elektrisch leitfähig, insbesondere nicht-metallisch. Stattdessen eignet sich die Methode besonders zur vorbeugenden und unmittelbaren Leckageüberwachung von mediumgrenzenden Kunststoffbauteilen (Kunststoffplatten, -rohre, -schläuche, - behälter). Es ist aber auch möglich, Objekte mit einer Metallaußenwand oder Objekte mit einer vorhandenen Metall-Nichtmetall-Compositestruktur auf die beschriebene Weise zu überwachen, wobei die metallischen Bestandteile oder Teile davon die sensorisch wirksamen Elemente, die in die Messbrücke eingekoppelt werden, bilden.

Bei der Überwachung von mehreren Objekten mit Hilfe von mehreren Sensoren und zugehörigen Messbrücken wird vorteilhafterweise jedem überwachten Objekt (das kann z. B. ein Rohrstück sein oder eine Teilfläche einer größeren Wandfläche) eine eindeutige individuelle Kennung zugeordnet, anhand derer es identifiziert werden kann. Die Messergebnisse und deren Bewertung können so dieser Kennung zugeordnet werden. Dadurch ist es möglich, die in einem späteren Stadium zur Leckage führende Veränderungs- oder Beschädigungsstelle im Wandmaterial, vereinfacht auch als Leckagestelle bezeichnet, zu lokalisieren.

Allgemein gesprochen kann die beschriebene Überwachungsvorrichtung in ein System einbezogen werden, das in der Lage ist, eine Ortsinformation bezüglich der Beschädigung zu liefern. Dies ist insbesondere dann möglich, wenn das Sensorelement oder die Elektrode des Messkreises eineindeutig einer signalverarbeitenden Einheit zugeordnet sind, die ihrerseits das gemessene Signal mit einer systemweit eineindeutigen Identifikation verknüpft.

Es ist auch möglich, eine Anordnung der Überwachungsorte in einzelne Sektionen einzuteilen, die mit einer zentralen Verarbeitungseinrichtung verbunden sind. Die Übermittlung des originalen und des bewerteten Messsignales kann über ein zuverlässiges Bussystem zu der zentralen Verarbeitungseinrichtung (z. B. Hostcomputer) erfolgen.

Mit der erfindungsgemäßen Messanordnung kann auch eine Schwingungs- oder Erschütterungsüberwachung für raumumschließende Objekte wie etwa Rohre, Schläuche oder Behälter und/oder dazwischen liegende Kupplungsbereiche erfolgen. Dies kann in der beschriebenen Weise durch Impedanzmessung im Bereich der Umfassungswand des überwachten Objekts und durch Auswertung der zeitlichen Änderungen erfolgen. Mit anderen Worten wird bei der Auswertung von zeitlichen Impedanzänderungen auf solche Änderungen verursachende Bewegungen oder Beschleunigungen von Rohr- oder sonstigen Segmenten geschlossen. Alternativ oder zusätzlich können dezidierte Beschleunigungssensoren, insbesondere in Chipform, in/an dem Objekt angeordnet sein, die entsprechende Beschleunigungsmesswerte unmittelbar bereitstellen.

Eine derartige Schwingungs- oder Erschütterungsüberwachung kann insbesondere eine oder mehrere der folgenden Zielsetzungen verfolgen, hier am Beispiel einer Pipeline veranschaulicht:
a) Einbruchsmeldung (engl. intrusion detection): Überwachung einer Pipeline auf mechanische Manipulationen, z.B. gezieltes Anbohren oder durch Vandalismus. Aber auch Erkennung von Baumaßnahmen in der Umgebung, die die Sicherheit bzw. Integrität der Pipeline gefährden.
b) Seismische Überwachung: Seismische Aktivitäten können in der gesamten Pipeline erfasst werden. Über eine Messpunktortung kann das Epizentrum lokalisiert werden. Die Messdaten werden für das Alterungsmanagement (engl. aging management) gespeichert und ausgewertet.
c) Betriebsvibrationen: Vibrationen, die aus dem laufenden Betrieb resultieren, werden erfasst und aufgezeichnet. Kurzzeitevents wie z.B. Kavitation werden erfasst. Die erfassten Messdaten werden ebenfalls zentral gespeichert und für das Alterungsmanagement ausgewertet.

Um die Messanordnung auf ordnungsgemäßen Zustand prüfen zu können, sind vorteilhafterweise Referenzschaltungen vorgesehen, die ein bekanntes Signal erzeugen können und dieses im Test- bzw. Prüfbetrieb und ggf. zum Zwecke einer Kalibrierung anstelle des Sensorsignales in die Messbrücke einspeisen.

Die Anordnung kann auch mit Feuchte- und/oder Temperatursensoren und/oder anderen Sensoren (etwa Beschleunigungssensoren) zur Erfassung der Umgebungsbedingungen oder bestimmter Materialeigenschaften versehen werden. Damit lassen sich dann weitere statistische oder messtechnische Bewertungen durchführen.

Von besonderem Interesse ist in diesem Zusammenhang die Temperaturmessung. Ähnlich zur Schwingungsüberwachung wird bevorzugt mindestens ein Temperatursensor auf jedem interessierenden Überwachungsmodul bzw. Rohrsegment realisiert / installiert. Der Temperatursensor kann auf/an der Innenseite oder der Außenseite der fluidführenden Umschließung angeordnet oder auch in die Wand integriert sein.

Temperaturmesswerte werden bevorzugt zyklisch abgefragt und zentral in einer Datenbank gespeichert. Es gibt zwei vorteilhafte Grundtypen der Auswertung:
- A posteriori:: Bei Pre-Leakage Alarm werden die gespeicherten Temperarturdaten untersucht und ermittelt, ob temperaturbedingte Materialermüdungserscheinungen aufgetreten sind.
- A priori:: Unter Berücksichtigung der Temperaturdaten kann eine verlässliche Prognose für diskrete Rohrsegmente bezüglich der maximalen Lebensdauer / Laufzeiterwartung gestellt werden. Daraus wird eine Austauschempfehlung an den Betreiber abgeleitet.

Allgemein werden bevorzugt alle Messdaten aus Pre-Leakage Monitoring, Schwingungsüberwachung und Temperaturüberwachung in einer Datenbank gespeichert. Alle Daten können miteinander verknüpft werden. Durch eine geeignete Gewichtung der einzelnen Einflussfaktoren kann ein Trend für jedes interessierenden Überwachungsmodul bzw. Rohrsegment berechnet werden (Alterungsmanagement).

Die messtechnische Anordnung kann über ein Datennetz mit anderen Stellen vernetzt werden und Informationen austauschen, beispielsweise um die Sensorsignale bezüglich klimatischer Einflüsse zu stabilisieren. Ebenso ist es möglich, die messtechnische Anordnung von extern zu überprüfen, ihr Parameter zuzustellen oder Informationen von ihr abzurufen.

Die Anordnung und Methode führt bevorzugt zu einer Erzeugung von Warnungen oder Alarmen oder von Informationen, die zur Alarmauslösung verwendet werden können. Es ist möglich, das interessierende Objekt kontinuierlich oder zyklisch zu überwachen.

Bislang lag der Schwerpunkt der Beschreibung auf der Überwachung flächiger Bereiche, insbesondere der Leckageüberwachung von Rohrkörpern. In analoger Weise kann aber auch eine gezielte Überwachung von Kupplungs- und Übergangsbereichen bei Rohr- / Schlauch- / Behältnis- und ähnlichen Objektverbindungen auf eine zur Leckage führende oder sie begünstigende Veränderung oder Beschädigung im Kupplungsspalt zwischen den beiden miteinander verbundenen Komponenten erfolgen. Auch in diesem Fall wird eine überwiegend elektrisch nicht-leitende Charakteristik des Rohrwand-Materials, jedenfalls in der Kupplungsregion, bevorzugt.

In diesem Fall umfasst die bevorzugte Anordnung der den Leckagesensor bildenden elektrischen Leiter im Wesentlichen einen oder mehrere die Verbindungsstelle vollständig umschließende leitfähige Ringe, die die Elektroden eines elektrischen Messkreises bilden. Bei den Ringen kann es sich insbesondere um elek-trisch leitfähige O-Ringe oder andere ring- oder hohlzylinderförmige Objekte in speziellen Anwendungen handeln, die auch Dichtfunktionen übernehmen können. Der Messkreis ist so gestaltet, dass Leckage-begünstigende Veränderungen in diesem Bereich zu einer wesentlichen Verstimmung des elektrischen Arbeitspunktes führen. Damit wird eine derartige Veränderung - insbesondere nach einer mediumbezogenen Bewertung der Änderung z. B. der Leitfähigkeit - eindeutig detektierbar. Mit anderen Worten kann auch hier eine signifikante Änderung elektrischer Parameter, im Allgemeinen der (komplexen) Impedanz, der umschließenden Anordnung von elektrisch leitfähigen Ringen festgestellt werden, die insbesondere mit der oben beschriebenen Brückenschaltung messtechnisch detektierbar ist.

Für den allgemeinen Anwendungsfall "Rohrüberwachung auf Leckage" ist es selbstverständlich möglich, die Überwachung des Rohrkörpers (Flächenüberwachung) und der Kupplung zwischen Rohrsegmenten zu koppeln bzw. miteinander zu kombinieren. Dies gilt in verallgemeinerter Weise auch für nicht-rohrförmige Objekte.

Die mit der Erfindung erzielten Vorteile bestehen insbesondere darin, dass durch die geschickte Kombination einer messtechnischen Methode und geeigneter signalverarbeitender Verfahren eine zuverlässige Entdeckung und Lokalisierung auch von geringfügigen Leckagen "in statu nascendi" oder sogar schon vorher (im Sinne einer vorbeugenden Überwachung) in medienführenden Rohrleitungen, Schläuchen, Strömungswegen, Tanks, Behältern und dergleichen ermöglicht ist. Es ist auch eine gezielte Überwachung von Rohrkupplungen und ähnlichen Verbindungsstellen mediumführender Umschließungen möglich. Wesentliche Aspekte im Hinblick auf die erzielte Sensitivität liegen in der Wahl der Messbrückenspeisung, in der Auswertung des resultierenden Messbrückensignales und in der Art und Weise, wie eine kleine Änderung des Sensorsignales einen großen Signalhub erzeugt. Die integrierte und permanent verfügbare Methode ist somit robust und führt zu einem ausreichenden Signalabstand zwischen Normalzustand und Leckage-begünstigendem Störungszustand. Die Sensoranordnung lässt sich überdies einfach unter Verwendung marktverfügbarer Materialien fertigen und ist für eine lange Einsatzdauer geeignet.

Ein Ausführungsbeispiel der Erfindung wird nachfolgend anhand von Zeichnungen näher erläutert. Dabei zeigen:
- FIG. 1: ein stark vereinfachtes und schematisiertes Prinzipschaltbild eines Leckageüberwachungssystems für raumumschließende Objekte wie etwa Rohre, Schläuche oder Behälter,
- FIG. 2: ein Beispiel des zeitlichen Verlaufs eines mit einem Leckageüberwachungssystem gemäß FIG. 1 aufgenommenen Messsignals,
- FIG. 3: einen Längsschnitt durch eine Rohrkupplung mit einer Elektrodenanordnung zur Leckagedetektion in diesem Bereich (nur eine Rohrhälfte ist dargestellt),
- FIG. 4: einen vergrößerten Ausschnitt aus FIG. 3, und
- FIG. 5: ein Detail aus FIG. 4.

Gleiche Teile sind in allen Figuren mit denselben Bezugszeichen versehen.

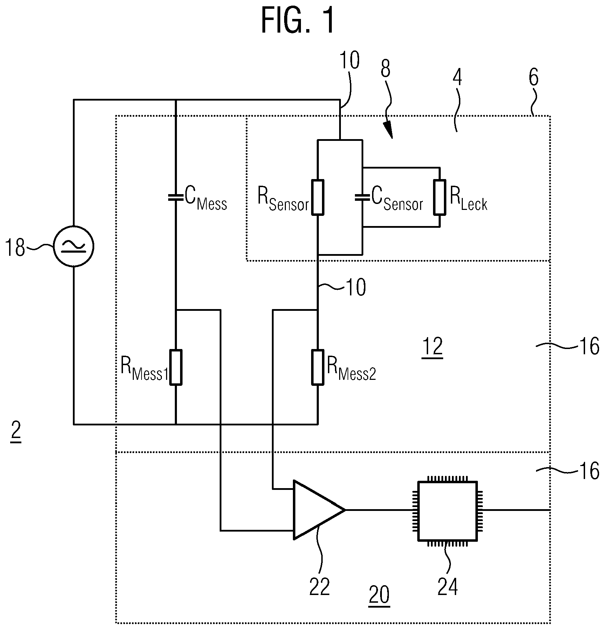

Das in FIG. 1 in stark abstrahierter Form dargestellte Leckageüberwachungssystem 2 dient dazu, auch kleinste Änderungen, die im weiteren zeitlichen Verlauf zu Leckagen von in einem Rohr 4 geführten Fluid oder Medium durch dessen Rohrwand bzw. Umfassungswand 6 hindurch ins Freie führen können, zu detektieren. Die Umfassungswand 6 bildet also die - möglichst dichte - geometrische Begrenzung eines Strömungskanals oder Aufnahmevolumens für das umschlossene Medium oder Fluid.

Ein weiteres Beispiel ist die Überwachung flächiger Kunststoffbauteile, wie sie im Behälterbau Verwendung finden.

Zu diesem Zweck ist in das aus einem Kunststoff bestehende, elektrisch nicht-leitende Hüllmaterial der Umfassungswand 6 ein Sensor 8 in Gestalt eines elektrisch leitenden Materials, hier beispielsweise in Gestalt eines Drahtnetzes oder Gewebes integriert. Konkret handelt es sich im Ausführungsbeispiel um ein GFK-Rohr, in dessen Wand zumindest ein Metall- oder Kohlenstofffaser- oder CFK-Gewebe als elektrisch leitendender Sensor eingebracht wurden. Dabei steht GFK für glasfaserverstärkten Kunststoff, und CFK für kohlefaserverstärkten Kunststoff. Das leitende Gewebe deckt hinsichtlich seiner Ausdehnung vorzugsweise die gesamte zu überwachende Wandfläche ab.

Das elektrische leitende Gewebe ist an zwei möglichst weit voneinander entfernt liegenden Stellen, etwa an dem einen und dem anderen Rohrende, mit jeweils einer elektrischen Anschlussleitung 10 verbunden, die aus der Umfassungswand 6 des Rohres 4 herausgeführt ist. Der dadurch verwirklichte zweipolige Sensor 8 lässt sich in dem dargestellten Ersatzschaltbild in erster Näherung als eine Parallelschaltung eines ohmschen Widerstandes R_{Sensor} und eines Kondensators (Kapazität) C_{Sensor} charakterisieren. Dieses Ersatzschaltbild ist nur exemplarisch zu verstehen; es können in der Praxis auch kompliziertere Fälle mit alternativ oder zusätzlich vorhandenen Induktivitäten in Parallel- und/oder Serienschaltung auftreten.

Im Falle einer drohenden Leckage von in dem Rohr 4 geführten Fluid oder Medium durch die Umfassungswand 6 nach außen, hervorgerufen beispielsweise durch mechanische Abnutzung oder Beschädigung, ändert sich zumindest eine der elektrischen Kenngrößen Widerstand, Kapazität und/oder Induktivität des Sensors 8. Ursachen hierfür können beispielsweise eine lokale Änderung der Dielektrizität und/oder mechanische Verformungen des leitenden Gewebes an Bruchstellen sein. Dies ist im Ersatzschaltbild - wiederum rein exemplarisch - durch den ohmschen Zusatzwiderstand R_{Leck}, hier in Parallelschaltung zu dem Widerstand Rsensor, angedeutet. Im Allgemeinen können sich auch die Kapazität und die Induktivität des Sensors 8 infolge der Veränderung in der Rohrwand und/oder des Leckagestroms ändern. Ganz allgemein kann man davon sprechen, dass sich der komplexe Wechselstromwiderstand (Impedanz) des Sensors 8 bei einer Leckagebegünstigenden Gefügeänderung ändert.

Zur Detektion derartiger Impedanzänderungen, die bei geringfügigen Änderungen vergleichsweise klein ausfallen können, ist der in das Rohr 4 integrierte Sensor 8 über seine Anschlussleitungen 10 in eine Wechselspannungsmessbrücke, kurz Messbrücke 12 eingekoppelt, die nach dem Grundprinzip einer Wheatstone-Messbrücke aufgebaut ist und konkret beispielsweise als Wien-Brücke oder Maxwell-Wien-Brücke verwirklicht ist. Die zur Vervollständigung der Brückenschaltung und zur Auswertung notwendigen elektronischen Komponenten, hier rein schematisch und beispielhaft angedeutet durch einen Messwiderstand R_{Mess1}, einen Messwiderstand R_{Mess2} und einen Messkondensator C_{Mess} sind in eine außerhalb des Rohres 4 angeordnete Messschaltung 16 ausgelagert. Im Allgemeinen kann die Messschaltung 16 anstelle der idealisierten elektrischen Bauelemente R_{Mess1}, R_{Mess2} und C_{Mess} drei komplexe Messwiderstände aufweisen, die zusammen mit dem komplexen Sensorwiderstand des Sensors 8 die Messbrücke 12 bilden, an deren Brückenzweig ein Spannungssignal V_{Mess} (Diagonalspannung oder Brückenquerspannung) abgegriffen wird.

Das im analogen Teil der Messschaltung 16 abgegriffene Spannungssignal V_{Mess} wird hier im Ausführungsbeispiel über entsprechende Anschlüsse und Leitungen einer digitalen Auswertungsvorrichtung 20 zugeführt, die beispielsweise einen Operationsverstärker 22 oder sonstigen Signalverstärker und einen Mikrocontroller 24 aufweist. Zur Visualisierung der in der Auswertungsvorrichtung 20 aufbereiteten und ggf. im Hinblick auf eine mögliche Leckage bewerteten Messergebnisse ist zweckmäßigerweise eine hier nicht dargestellte Anzeigevorrichtung vorgesehen.

Im Gegensatz zur gleichspannungsgespeisten Wheatstone-Brücke wird die Messbrücke 12 über eine Spannungsquelle 18 mit einer Betriebsspannung U_{G} versorgt, die sowohl Wechselspannungsanteile, vorzugsweise mit einer einzigen festen Grundfrequenz ω, als auch Gleichspannungsanteile enthält, nämlich in Form einer Überlagerung oder Superposition, also beispielsweise U(t) = U₀ + U₁ cos(ωt). Dadurch ändert sich die im Brückenzweig abgegriffene Brückenquerspannung V_{Mess} in der Regel drastisch, auch wenn sich die Impedanz des Sensors 8 nur geringfügig infolge einer Leckage bzw. einer zur Leckage führenden Gefügeänderung ändert.

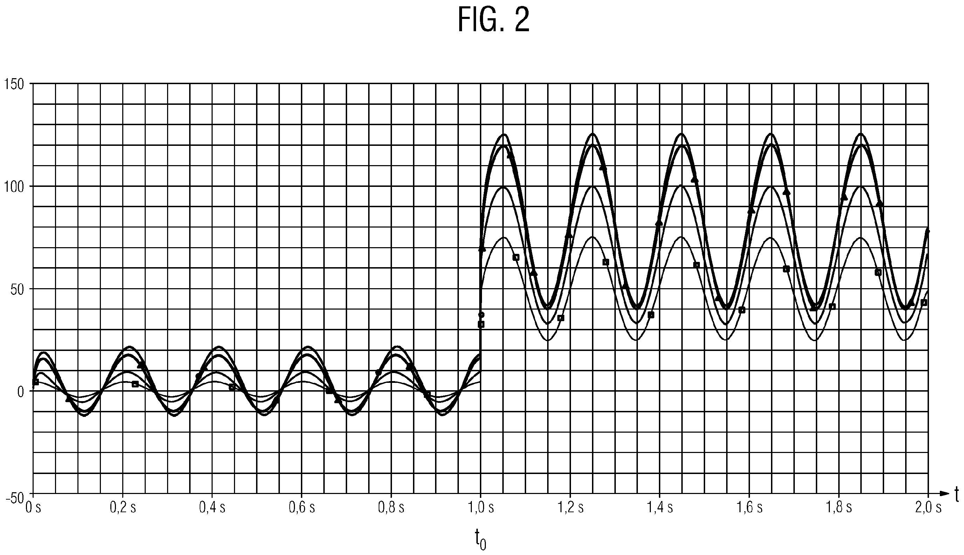

Dies ist in FIG. 2 veranschaulicht, die das im Brückenzweig anliegende Spannungssignal V_{Mess} als Funktion der Zeit t darstellt. Man erkennt, dass eine zum Zeitpunkt t₀ einsetzende, eine Leckage begünstigende oder mit ihr einhergehende Änderung an dem überwachten Rohrabschnitt drastische Auswirkungen auf den Signalverlauf hat, insbesondere das Signal-Rausch-Verhältnis erhöht, was für eine manuelle oder automatisierte Alarmauslösung verwendet kann. Dazu können weitere, hier nicht dargestellte Funktionsmodule in die Messschaltung 16 gemäß FIG. 1 integriert oder an diese angekoppelt sein.

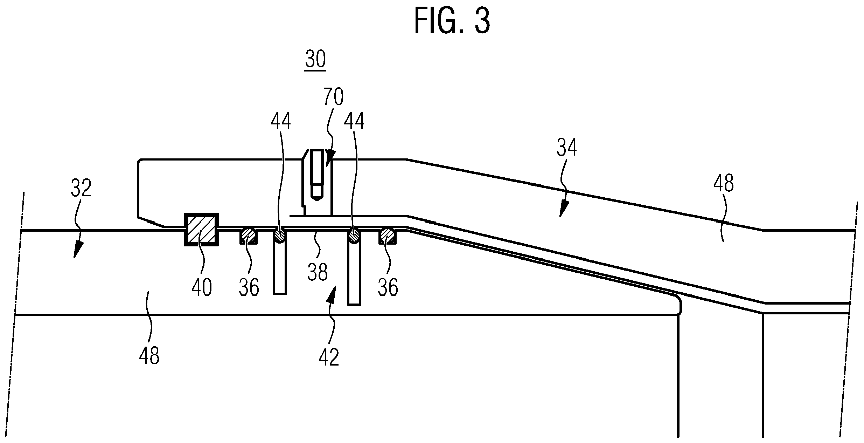

In FIG. 3 ist ein spezieller Fall der Überwachungseinrichtung bei einer GFK-Rohrleitung veranschaulicht, nämlich im Bereich der Kupplung 30 zwischen zwei Rohrsegmenten 32, 34. Ein erstes Rohrsegment 32, hier das linke, weist endseitig einen Abschnitt mit einem sich verjüngenden Außendurchmesser auf und ist passgenau in ein zweites Rohrsegment 34, hier das rechte, hineingesteckt, welches endseitig einen Abschnitt mit einem sich entsprechend erweiternden Innendurchmesser aufweist. Zwei umlaufende O-Ring-Dichtungen 36 dichten den ringförmigen / hohlzylindrischen Spalt 38 zwischen den beiden Rohrsegmenten 32, 34 ab. Ferner dient ein umlaufender Bügel 40 als mechanische Sperre und Verriegelung für die Kupplung 30. Beispielsweise kann eine Bajonettverriegelung oder dergleichen vorgesehen sein.

Zur (vorbeugenden) Detektion einer bevorstehenden oder stattfindenden Leckage von Strömungsmedium aus dem Rohrinneren durch den Spalt 38 hindurch in die Umgebung, wie sie insbesondere bei einer Beschädigung der beiden O-Ring-Dichtungen 36 auftreten kann, ist ein Leckagesensor 42 in die Kupplungsregion integriert. Der Leckagesensor 42 umfasst hier im Wesentlichen zwei (im Allgemeinen zumindest einen) am inneren Rohrsegment 32 fixierte und in den Spalt 38 hinein ragende elektrisch leitfähige Ringe 44, die Elektroden einer zugehörigen Messschaltung bilden, welche ähnlich wie im Ausführungsbeispiel gemäß FIG. 1 aus einer mit simultan mit Wechselspannung und Gleichspannung gespeisten Brückenschaltung bestehen kann. Die dortigen Ausführungen zum Messprinzip und zur Auswertung sowie Alarmerzeugung gelten entsprechend auch hier.

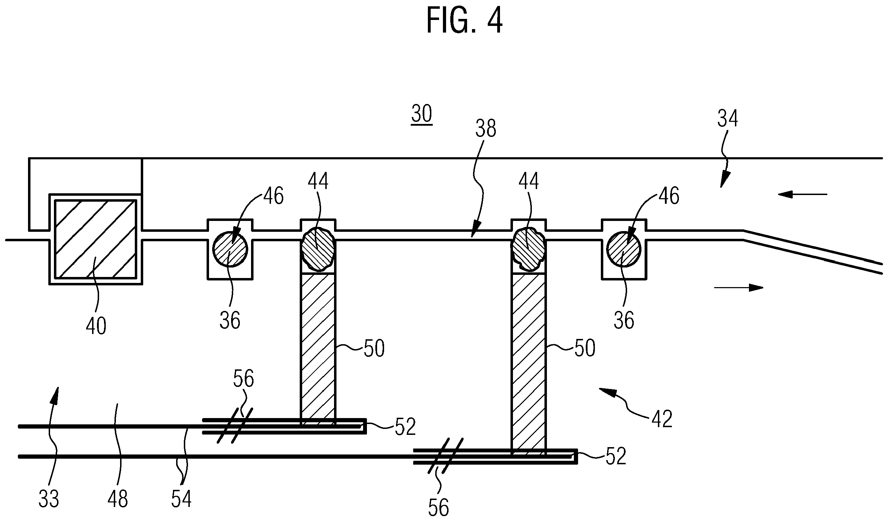

FIG. 4 greift einige Details aus FIG. 3 vergrößert heraus, nämlich die detaillierte Form und die elektrische Kontaktierung der Elektroden 46. Man erkennt, dass die die Elektroden 46 bildenden, in den Spalt 38 zwischen den beiden Rohrsegmenten 32, 34 hinein ragenden Ringe 44 aus Metallgeflecht von radial in entsprechende Aussparrungen in der Rohrwand 48 des inneren Rohrsegments 32 angeordneten Metallhülsen 50 kontaktiert werden. Am gegenüber liegenden Ende sind die Metallhülsen 50 jeweils durch eine elektrisch / mechanisch stabile Verbindung, hier durch Punktschweißung mit einem in die Rohrwand 48 eingebetteten Kontaktbügel 52 verbunden, an den eine elektrische Anschlussleitung 54 mit einem Verbindungselement 56 angeklemmt ist.

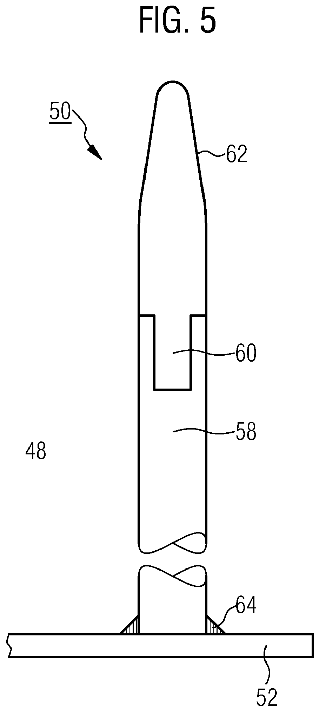

Eine der Metallhülsen 50 ist in FIG. 5 vergrößert im Querschnitt dargestellt. Sie umfasst ein fest in die Rohrwand 48 eingesetztes zylindrisches Ankerteil 58 und ein mittels eines Gewindefortsatzes 60 in das Ankerteil 58 einschraubbares Aufsatzteil 62 in Gestalt eines Dorns. Im Montageendzustand ragt die Spitze des Dorns aus der Rohrwand 48 heraus und in den Spalt 38 hinein. An dem in die Rohrwand 48 hinein ragenden Ende ist das Ankerteil 58 an seiner Stirnfläche mit dem Kontaktbügel 52 verschweißt, was durch die Hardlot-Schweißnaht 64 angedeutet ist.

Das Aufsatzteil 62 kann zum Zwecke einer elektrischen Kontaktierung nach der Herstellung entfernt werden. Dann ist an dem Gewindefortsatz 60 ein elektrischer Anschluss möglich, der Teil der in FIG. 1 dargestellten Messschaltung ist.

**Bezugszeichenliste**

| | | | |
|---|---|---|---|
| 2 | Leckageüberwachungssystem | C | Kapazität |
| 4 | Rohr | R | Widerstand |
| 6 | Umfassungswand | U, V | Spannung |
| 8 | Sensor | | |
| 10 | Anschlussleitung | t | Zeit |
| 12 | Messbrücke | | |
| 16 | Messschaltung | | |
| 18 | Spannungsquelle | | |
| 20 | Auswertungsvorrichtung | | |
| 22 | Operationsverstärker | | |
| 24 | Mikrocontroller | | |
| 30 | Kupplung | | |
| 32 | Rohrsegment | | |
| 34 | Rohrsegment | | |
| 36 | O-Ring-Dichtung | | |
| 38 | Spalt | | |
| 40 | Bügel | | |
| 42 | Leckagesensor | | |
| 44 | Ring | | |
| 46 | Elektrode | | |
| 48 | Rohrwand | | |
| 50 | Metallhülse | | |
| 52 | Kontaktbügel | | |
| 54 | Anschlussleitung | | |
| 56 | Verbindungselement | | |
| 58 | Ankerteil | | |
| 60 | Gewindefortsatz | | |
| 62 | Aufsatzteil | | |
| 64 | Schweißnaht | | |
| 70 | Kontakthülse | | |

## Patentansprüche

1. Leckageüberwachungssystem für einen Verbindungs- oder Kupplungsbereich bei einer Rohr- oder Schlauchverbindung, wobei im verbundenen Zustand ein erstes Rohr- oder Schlauchsegment (32) unter Ausbildung eines Spaltes (38) mit einem zweiten Rohr- oder Schlauchsegment (34) verbunden ist, wobei der Spalt (38) durch zwei in Längsrichtung der Rohr- oder Schlauchverbindung gesehen hintereinander angeordnete Dichtungselemente abgedichtet ist, und wobei zwischen den beiden Dichtungselementen mindestens eine in den Spalt (38) hineinragende Elektrode (44) angeordnet ist, die als Leckagesensor (42) wirksam ist.

2. Leckageüberwachungssystem nach Anspruch 1, wobei im Spalt (38) zwischen den beiden Dichtungselementen zwei hintereinander angeordnete Elektroden (44) angeordnet sind.

3. Leckageüberwachungssystem nach Anspruch 1 oder 2, wobei der Spalt (38) hohlzylinderförmig ist.

4. Leckageüberwachungssystem nach Anspruch 3, wobei die jeweilige Elektrode (44) ringförmig ist.

5. Leckageüberwachungssystem nach einem der Ansprüche 1 bis 4, wobei das jeweilige Dichtungselement eine O-Ring-Dichtung (36) ist.

6. Leckageüberwachungssystem nach einem der Ansprüche 1 bis 5, wobei eines der beiden Rohr- oder Schlauchsegmente (34) zur Herstellung der Rohr- oder Schlauchverbindung auf das andere Rohr- oder Schlauchsegment (32) gesteckt ist.

7. Leckageüberwachungssystem nach einem der Ansprüche 1 bis 6 mit einer an die Elektrode/n (44) angeschlossenen Messeinrichtung, welche dazu ausgelegt ist, eine Impedanzänderung im Spalt (38) zu detektieren.
